# EUROPÄISCHE PATENTANMELDUNG

(11) **EP 1 243 364 A1**
(43) Veröffentlichungstag der Anmeldung: **25.09.2002**
(21) Anmeldenummer: 02002340.4
(22) Anmeldetag: 31.01.2002
(51) Int. Cl.: B23B 27/16

(54) **Werkzeug zur spanabtragenden Bearbeitung von Werkstücken**

(30) Priorität: 22.03.2001 DE 10114747
(71) Anmelder: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(57) **Zusammenfassung**

Es wird ein Werkzeug zur spanabtragenden Bearbeitung von Werkstücken vorgeschlagen, das mindestens eine eine aktive Schneide aufweisende Messerplatte aufweist, die mittels einer Spannpratze am Werkzeug festspannbar ist. Das Werkzeug zeichnet sich dadurch aus, dass die Messerplatte (1;1') auf ihrer der aktiven Schneide (13) gegenüberliegenden Seitenkante (25) einen keilförmigen Ansatz (27) aufweist, der sich - ausgehend von der Vorderseite (15) der Messerplatte (1;1'), 33 auf der die Spannpratze (37) aufliegt - in Richtung zur Rückseite (29) verbreitert.

## Beschreibung

Die Erfindung betrifft ein Werkzeug zur spanabtragenden Bearbeitung von Werkstücken gemäß Oberbegriff des Anspruchs 1.

Werkzeuge der hier angesprochenen Art sind bekannt. Sie weisen mindestens eine Schneide auf, die mittels einer Spannpratze so am Werkzeug festgespannt sind, dass ein Teilbereich der Messerplatte über die Umfangsfläche des Werkzeugs übersteht und als Schneide zum Abtragen von Spänen zur Verfügung steht. Dabei wird entweder das Werkstück am feststehenden Werkzeug vorbeigeführt oder aber das Werkzeug in Rotation versetzt und mit dem Werkstück in Eingriff gebracht.

Insbesondere bei der Verwendung von Messerplatten, die mit polykristallinem Diamant PKD oder kubischem Bornitrid CBN bestückt sind, bedarf es einer gewissen Dicke der Messerplatten, um einen guten Halt des Einsatzes in der Messerplatte zu gewährleisten. Besonders bei kleinen Werkzeugdurchmessern und bei Werkzeugen, an deren Umfang mehrere Schneiden eingebracht werden sollen, führt dies zu Platzproblemen. Es hat sich herausgestellt, dass in einigen Anwendungsfällen die Berührungsfläche zwischen Messerplatte und Werkzeug so gering ist, dass ein sicherer Halt der Messerplatte nicht mehr gewährleistet ist. Es ist also möglich, dass die Messerplatte aus der vorgegebenen Position verlagert wird und gegebenenfalls abbricht, so dass herumfliegende Teile der Messerplatte eine Gefährdung darstellen, oder aber zumindest zu einer Beschädigung des Werkstücks oder Werkzeugs führen können.

Aufgabe der Erfindung ist es daher, ein Werkzeug der eingangs genannten Art zu schaffen, das diesen Nachteil nicht aufweist.

Zur Lösung dieser Aufgabe wird ein Werkzeug vorgeschlagen, das die in Anspruch 1 genannten Merkmale aufweist. Es zeichnet sich dadurch aus, dass die Messerplatte auf ihrer der aktiven Schneide gegenüberliegenden Seitenkante einen keilförmigen Ansatz aufweist. Dieser verbreitert sich - ausgehend von der Vorderseite der Messerplatte aus - in Richtung zu deren Rückseite, mit der sie am Werkzeug anliegt. Auf diese Weise ist es möglich, die Anlagefläche zwischen Messerplatte und Werkzeug so zu vergrößern, dass ein sicherer Halt gewährleistet ist.

Bevorzugt wird ein Ausführungsbeispiel des Werkzeugs, das sich dadurch auszeichnet, dass die Messerplatte - in Seitenansicht gesehen - im wesentlichen parallelogrammförmig ausgebildet ist. Es ist damit möglich, die Messerplatte als sogenannte Wendeplatte auszugestalten und mit zwei Schneidkanten zu versehen. Wenn eine über die Umfangsfläche hinausragende aktive Schneidkante stumpf geworden ist, ist es möglich, die Messerplatte um eine auf der Seitenkante senkrecht stehende Drehachse um 180° zu drehen und die der aktiven Schneide gegenüberliegende Schneide nunmehr mit einem Werkstück in Eingriff zu bringen.

Weitere Vorteile ergeben sich aus den übrigen Unteransprüchen.

Die Erfindung wird im Folgenden anhand der Zeichnung näher erläutert. Es zeigen:
- Figur 1: eine Draufsicht auf die Vorderseite einer Messerplatte;
- Figur 2: eine Ansicht der Stirnseite der Messerplatte und
- Figur 3: eine Prinzipskizze einer von einer Spannpratze gehaltenen Messerplatte, die als Wendeplatte ausgebildet ist.

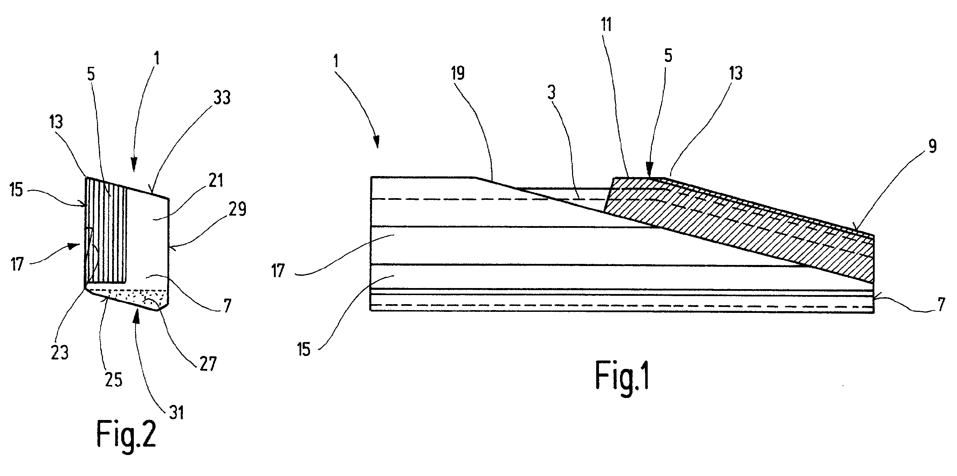

Die in Figur 1 dargestellte Messerplatte 1 ist hier im Wesentlichen rechteckförmig ausgebildet. Im Bereich der rechten oberen Kante wurde die Messerplatte 1 abgeschliffen, so dass sich eine Stufe 3 bildet, die einen Schneideinsatz 5 aufnimmt. Dieser ist im Bereich der Stufe 3 vorzugsweise fest gelötet und besteht aus PKD oder CBN, insbesondere aus einem sehr verschleißfesten Material, um eine hohe Standfestigkeit der Messerplatte 1 zu gewährleisten.

Der Schneideinsatz 5 erstreckt sich bis zur Stirnseite 7 der Messerplatte 1, die hier eine rechte Begrenzungskante der Messerplatte 1 bildet. Der Schneideinsatz 5 ist mit einer in Richtung der Stirnseite 7 abfallenden Flanke 9 versehen, die in einen im wesentlichen horizontal verlaufenden Abschnitt 11 übergeht. Der Schnittpunkt zwischen dem Abschnitt 11 und der Flanke 9 stellt die aktive Schneide 13 dar, wobei in Richtung der Stirnseite 7 abfallende Bereiche die Hauptschneide und horizontal oder insbesondere leicht in entgegengesetzter Richtung abfallende Bereiche des Abschnitts 11 die Nebenschneide bilden.

In die Vorderseite 15 der Messerplatte 1 ist eine Spannnut 17 eingebracht, die unter einem spitzen Winkel von vorzugsweise 10° von unten nach oben in die Bildebene hinein abfällt und damit eine Flanke aufweist, auf der eine hier nicht dargestellte Spannpratze aufliegt.

Zwischen der Vorderseite 15 und der Stufe 3 ergibt sich eine Kante 19, die unter einem spitzen Winkel von links nach rechts in Richtung auf die Stirnseite 7 abfällt. Damit ist es möglich, auch im Bereich der Flanke 9 einen spitzen Winkel zu realisieren, so dass die Hauptschneide einen sehr flachen und langen Anschnittwinkel aufweist.

Aus Figur 1 ist ersichtlich, dass das Grundmaterial der Messerplatte 1 im Bereich der aktiven Schneide 13 vollständig ersetzt wird durch den aus Hartmaterial bestehenden Schneideinsatz 5.

Die in Figur 2 wiedergegebene Ansicht der Messerplatte 1 zeigt deren Stirnseite 7. Durch parallele Linien ist der Schneideinsatz 5 vom übrigen Grundkörper 21 der Messerplatte 1 abgehoben. Aus der Seitenansicht gemäß Figur 2 ist die flach abfallende Flanke 23 der Spannnut 17 erkennbar.

Aus der Darstellung gemäß Figur 2 ergibt sich auch, dass die Messerplatte auf ihrer der aktiven Schneide 13 gegenüberliegenden Seitenkante 25 einen keilförmigen, hier durch eine Punktierung hervorgehobenen Ansatz 27 aufweist, der sich - ausgehend von der Vorderseite 15 der Messerplatte 1 - in Richtung zur Rückseite 29 der Messerplatte verbreitert. Der Ansatz 27 bildet damit eine nach unten abfallende Anlagefläche 31, mit der die Messerplatte 1 im festgespannten Zustand auf einem Widerlager aufliegt, beispielsweise auf einer Einstellvorrichtung, mit deren Hilfe der Überstand der aktiven Schneide 13 über die Umfangsfläche des zugehörigen Werkzeugs einstellbar ist.

Aus der Seitenansicht der Messerplatte 1 ist schließlich erkennbar, dass einerseits die Vorderseite 15 parallel zur Rückseite 29 verläuft, dass aber auch die Oberseite 33 parallel zur unteren Seitenkante 25 verläuft. Dabei schließen die Oberseite 33 und die Seitenkante 25 einen stumpfen Winkel mit der Vorder- beziehungsweise Rückseite der Messerplatte 1 ein, so dass die Stirnseite 7 der Messerplatte 1 praktisch als Parallelogramm ausgebildet ist.

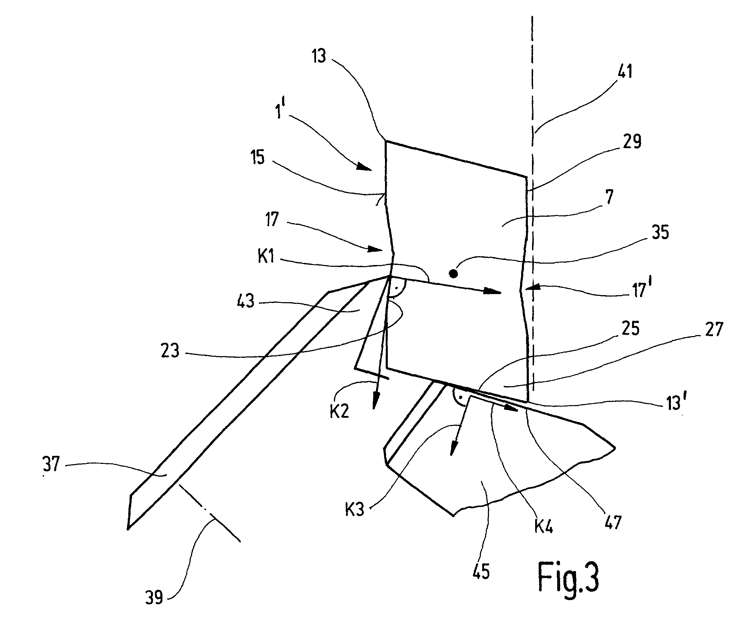

Die Prinzipskizze gemäß Figur 3 zeigt ein weiteres Ausführungsbeispiel einer Messerplatte 1', deren dem Betrachter zugewandte Stirnseite 7 ebenfalls parallelogrammförmig ausgebildet ist. In der Darstellung gemäß Figur 3 ist also die Messerplatte 1' in einer Position wiedergegeben, wie sie auch in Figur 2 dargestellt ist. Gleiche Teile sind mit gleichen Bezugsziffern versehen, so dass insofern auf die Erläuterungen zu Figur 2 verwiesen werden kann.

Das in Figur 3 dargestellte Ausführungsbeispiel der Messerplatte 1' zeichnet sich dadurch aus, dass einerseits auf ihrer Vorderseite 15 eine Spannnut 17 vorgesehen ist, dass aber zusätzlich auf deren Rückseite 29 eine weitere Spannnut 17' vorgesehen ist. Bei dem in Figur 3 dargestellten Ausführungsbeispiel der Messerplatte 1' sind die Spannnut 17 und 17' V-förmig ausgebildet, wobei die Flanken der Spannnuten 17, 17' in einem spitzen Winkel von zirka 10° gegenüber Vorderbeziehungsweise Rückseite angeordnet sind.

Die obere linke Kante der Messerplatte 1', die über die Umfangsfläche des Werkzeugs übersteht, dient hier wiederum als aktive Schneide 13, mit der Späne von einem Werkstück abgetragen werden können. Das hier dargestellte Ausführungsbeispiel der Messerplatte 1' ist als Wendeplatte ausgebildet. Das heißt, auf der diametral gegenüberliegenden Seite der Messerplatte befindet sich eine weitere Schneide 13', die bei einer Drehung der Messerplatte 1' um eine senkrecht auf der Stirnseite 7 stehende Längsachse, die durch einen Punkt 35 angedeutet ist, über die Umfangsfläche des Werkzeugs ragt und mit einem Werkzeug in Eingriff gebracht werden kann.

In Figur 3 ist eine Spannpratze 37 angedeutet, die mittels einer Spannschraube, die hier lediglich durch eine strichpunktierte Linie 39 angedeutet ist, am Grundkörpers des Werkzeugs befestigt werden kann, um die Messerplatte mit ihrer Rückseite 29 fest gegen eine Anlagefläche anzupressen, die am Grundkörper des Werkzeugs ausgebildet und hier von einer gestrichelten Linie 41 angedeutet ist.

Die Spannpratze 37 liegt mit einer Spannlippe 43 auf der Vorderseite 15 der Messerplatte 1' auf, und zwar auf der flach abfallenden Flanke 23 der Spannnut 17. Die Flanke 23 bewirkt eine Aufteilung der von der Spannlippe 43 auf die Messerplatte 1' ausgeübten Kräfte: Eine erste Kraftkomponente K1 steht senkrecht auf der Flanke 23 und wirkt damit in Richtung auf die durch die Linie 41 angedeutete Anlagefläche. Eine zweite Komponente K2, die wiederum durch einen Pfeil angedeutet ist, verläuft in der Ebene der Flanke 23.

Die der aktiven Schneide 13 gegenüberliegende Seitenkante 25 der Messerplatte 1' liegt auf einem Widerlager auf, hier auf mindestens einem Stellkeil 45, der Teil einer Einstelleinrichtung ist und dazu dient, den Überstand der aktiven Schneide 13 über die Umfangsfläche des Werkzeugs einzustellen und damit dessen Bearbeitungsdurchmesser.

Der Stellkeil 45 weist eine Anlagefläche 47 auf, die im wesentlichen parallel zur Seitenkante 25 verläuft. Die nach unten gerichtete von der Spannlippe 43 bewirkte Kraftkomponente K2 spaltet sich im Bereich der Anlagefläche 47 wiederum auf, wobei eine erste Kraftkomponente K3 senkrecht auf der Anlagefläche 47 steht und eine zweite Kraftkomponente K4 im wesentlichen in diese Anlagefläche 47 verläuft. Diese Kraftkomponente K4 bewirkt, dass die der aktiven Schneide 13 gegenüberliegende Unterseite der Messerplatte 1' mit einer definierten Kraft K4 gegen die durch die Linie 41 angedeutete Anlagefläche angepresst wird.

Die Kräfteaufteilung im Bereich der Anlagefläche 47 wird dadurch erreicht, dass die Messerplatte 1' einen Ansatz 27 aufweist, durch den sich die Messerplatte 1' nach unten verbreitert, was auch zu einer deutlich vergrößerten Anlagefläche im Bereich der Rückseite 29 der Messerplatte 1' führt.

Die Prinzipskizze gemäß Figur 3 zeigt also deutlich, dass die anhand der Figuren 1 bis 3 erläuterte Messerplatte 1 aufgrund des Ansatzes 27 im Bereich ihrer der aktiven Schneide 13 gegenüberliegenden Seitenkante 25 mit einer Kraftkomponente K4 beaufschlagt wird, die für eine sichere Verankerung der Messerplatte 1 beziehungsweise 1' im Werkzeug sorgt. Dies ist auch dann der Fall, wenn die Messerplatte 1' beziehungsweise 1 an einem feststehenden Widerlager anliegt, wenn also an Stelle des Stellkeils 45 eine schräge Anlagefläche für die Messerplatte 1 beziehungsweise 1' zur Verfügung gestellt wird.

Aus den Erläuterungen zu den Figuren wird deutlich, dass die verbesserte Einspannmöglichkeit der Messerplatte auch dann gegeben ist, wenn auf einen Schneideinsatz 5, wie er anhand der Figuren 1 und 2 erläutert wurde, verzichtet wird. Es zeigt sich aber auch, dass durch den Ansatz 27 der Messerplatte 1, 1' zusätzliches Material zur Verfügung steht, welches die Einbringung eines Schneideinsatzes 5 auch bei Messerplatten 1, 1' kleiner Abmessungen ermöglicht.

Wird die Messerplatte 1', wie sie anhand von Figur 3 erläutert wird, mit zwei Spannnuten 17 und 17' versehen, so ist es möglich, eine Wendeplatte zu realisieren, die bei Verschleiß der aktiven Schneide 13 um eine durch den Punkt 35 in Figur 3 angedeutete Längsachse drehbar ist, um bei Verschleiß der aktiven Schneide 13 die unversehrte Schneide 13' für die weitere Bearbeitung eines Werkstücks zur Verfügung zu stellen.

Die anhand der Figuren besprochene Spannnuten 17, 17' braucht sich nicht über die gesamte Breite der Messerplatte 1, 1' zu erstrecken. Es ist beispielsweise möglich, rechts und links einen Steg vorzusehen, der die Spannnut abschließt und ein Eindringen von Spänen oder sonstigen Fremdkörpern zwischen Spannpratze 37 und Vorderseite 15 der Messerplatte 1, 1' verhindert, zumindest erschwert.

## Patentansprüche

1. Werkzeug zur spanabtragenden Bearbeitung von Werkstücken, mit mindestens einer eine aktive Schneide aufweisenden Messerplatte, die mittels einer Spannpratze am Werkzeug festspannbar ist, **dadurch gekennzeichnet, dass** die Messerplatte (1;1') auf ihre der aktiven Schneide (13) gegenüberliegenden Seitenkante (25) einen keilförmigen Ansatz (27) aufweist, der sich - ausgehend von der Vorderseite (15) der Messerplatte (1;1'), auf der die Spannpratze (37) aufliegt - in Richtung zur Rückseite (29) verbreitert.

2. Werkzeug nach Anspruch 1, **dadurch gekennzeichnet, dass** die Messerplatte (1;1') - in Seitenansicht gesehen - im wesentlichen parallelogrammförmig ausgebildet ist.

3. Werkzeug nach Anspruch 1 oder 2, **dadurch gekennzeichnet, dass** die Messerplatte (1;1') dazu als Wendeplatte ausgebildet ist und zwei - in Seitenansicht gesehen - diametral gegenüberliegende Schneiden (13,13') aufweist.

4. Werkzeug nach einem der vorhergehenden Ansprüche, **dadurch gekennzeichnet, dass** die Messerplatte (1;1') auf ihrer Vorderseite (15) eine Spannnut (17) aufweist.

5. Werkzeug nach einem der vorhergehenden Ansprüche, **dadurch gekennzeichnet, dass** die Messerplatte (1') auf ihrer Rückseite (29) eine Spannnut (17') aufweist.

6. Messerplatte nach Anspruch 4 oder 5, **dadurch gekennzeichnet, dass** die Spannnut (17,17') nicht über die gesamte Breite der Messerplatte (1;1') verläuft.
